# EUROPEAN PATENT APPLICATION

(11) **EP 2 538 269 A1**
(43) Date of publication of application: **26.12.2012**
(21) Application number: 12172762.2
(22) Date of filing: 20.06.2012
(51) Int. Cl.: G02F 1/1335, G02F 1/167

(54) **Transflective liquid crystal display**

(30) Priority: 20.06.2011 US 201113164413
(71) Applicant: Hewlett-Packard Development Company, L.P., Houston, TX 77070 (US)
(72) Inventor: Yeo, Jong-Souk, Corvallis Oregon 97330-4239 (US); Mabeck, Jeffrey Todd, Corvallis Oregon 97330-4239 (US); Zhou, Zhang-Lin, Palo Alto California 94304-1100 (US)
(74) Representative: Beccarelli, Sandra Béatrice Yvonne

(57) **Abstract**

A transflective display (10) includes a backlight (14) and a display stack (12). The display stack (12) includes a liquid crystal layer (28) and an addressing layer (30) operatively connected to the liquid crystal layer (28). A white electro-optic layer (16) is positioned between the backlight (14) and the display stack (12). The white electro-optic layer (16) is switchable between a white reflective mode and a clear transmissive mode, or any state between these two modes. Generally, the white electro-optic layer (16) may be an in-plane electrophoretic device. The display (10) further includes a light sensor (26) operatively and electrically connected to the electrodes (38, 42) of the white electro-optic layer (16). The sensor (26) detects the ambient light to which the display (10) is exposed, and automatically tunes the white electro-optic layer (16) to the transmissive mode, the reflective mode, or to a state somewhere between the transmissive and reflective modes, depending upon the ambient lighting conditions.

## Description

### BACKGROUND

The present disclosure relates generally to transflective displays.

Displays may be reflective (i.e., ambient light is used to illuminate the display), emissive/transmissive (i.e., light emitted from a light source of the display is used to illuminate the display), or transflective (i.e., uses ambient light and/or light from a light source of the display for illuminating the display). Transflective displays exhibit reflective properties when illuminated by ambient light and transmissive properties when illuminated by the display light source. As a result, transflective displays are useful in both bright and dark environments.

### BRIEF DESCRIPTION OF THE DRAWINGS

Features and advantages of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
Figs. 1A, 1B and 1C are schematic side views of an example of a transflective display when in a transmissive mode, when in a reflective mode, and when in a transmissive/reflective mode;
Fig. 2 is a perspective exploded view of one example of a transflective display;
Fig. 3 is a schematic diagram of an example of an addressing layer of the transflective display;
Figs. 4A and 4B are cross-sectional views of an example of a white electro-optic layer in transmissive mode and reflective mode;
Figs. 5A through 5C are cross-sectional views of other examples of the white electro-optic layer;
Fig. 6 is a top view of an electrode configuration that may be used in examples of the white electro-optic layer;
Fig. 7 is a top view of another electrode configuration that may be used in examples of the white electro-optic layer;
Fig. 8A is a cross-sectional view of still another example of the white electro-optic layer;
Fig. 8B is a top view of the example of the white electro-optic layer shown in Fig. 8A;
Figs. 9A and 9B are cross-sectional views of another example of a white electro-optic layer in transmissive mode and reflective mode; and
Fig. 10 is a cross-sectional view of another example of the transflective display.

### DETAILED DESCRIPTION

In the following detailed description, directional terminology, such as "top," "bottom," "front," "back," etc., is used with reference to the orientation of the Figure(s) being described. Components of examples of the present disclosure can be positioned in a number of different orientations, and thus the directional terminology is used for purposes of illustration and is in no way limiting. It is to be understood that other examples may be utilized and structural or logical changes may be made without departing from the scope of the present disclosure. As used herein, the term "over" is not limited to any particular orientation and can include above, below, next to, adjacent to, and/or on. In addition, the term "over" can encompass intervening components between a first component and a second component where the first component is "over" the second component. Also as used herein, the term "adjacent" is not limited to any particular orientation and can include above, below, next to, and/or on. In addition, the term "adjacent" can encompass intervening components between a first component and a second component where the first component is "adjacent" to the second component.

Examples of the transflective display disclosed herein include a white electro-optic layer positioned between a backlight and a display stack. In one example, the white electro-optic layer is operatively connected to a light sensor that controls the state of the white electro-optic layer in response to ambient lighting conditions. The state of the white electro-optic layer may range anywhere from a fully transmissive mode to a fully reflective mode. The modulation of the white electro-optic layer depends, at least in part, upon the ambient lighting conditions, and as such, in some instances, the white electro-optic layer may be in an intermediate state where the display is both reflective and transmissive. Compared to transflective displays that have inverted images in reflective and transmissive modes or that use reflective or transmissive sub-pixels, the addition of the white electro-optic layer provides desirable reflective and transmissive performance.

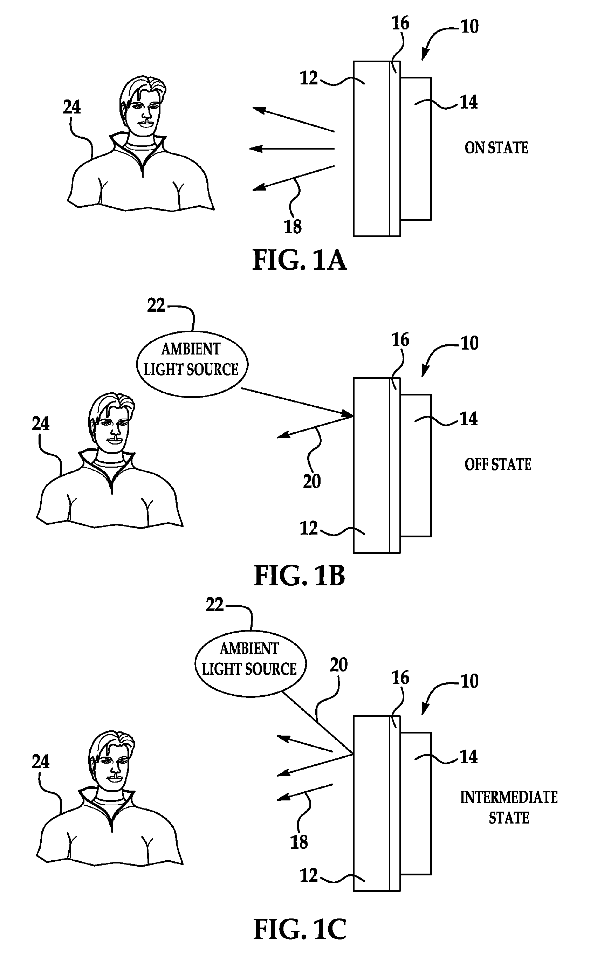

The fully transmissive mode and fully reflective mode of a transflective display are respectively shown schematically in Figs. 1A and 1B. Fig. 1C schematically illustrates a transmissive/reflective mode of the transflective display. More particularly, these figures schematically illustrate side views of an example of the transflective display 10, which includes a display stack 12 and a white electro-optic layer 16 (which are discussed further in reference to the other figures) and a light source 14 (also referred to herein as a backlight). In fully transmissive mode (see Fig. 1A), the backlight 14 is in an ON state and emits enough light 18 through the display stack 12 and white electro-optic layer 16 so that the display screen (not shown) is illuminated and is viewable, for example, by viewer 24. In reflective mode (see Fig. 1B), the backlight 14 is in an OFF state and does not emit light 18. Rather, in reflective mode, the display stack 12 and white electro-optic layer 16 are configured to reflect ambient light 20 from an external light source 22. The external light source 22 may be any source of light common to home, work, or an outdoor environment, or a source of light that is attached to or integrated with the display 10 for use in reflective mode. In one example, the external light source emits white light, which includes red light, green light, and blue light. In reflective mode, light 20 incident on the display 10 is modulated so that the display screen reflects a desired color at desired coordinates of the display 10. It is to be understood that the transflective display 10 may also operate simultaneously in the reflective and transmissive modes. This may occur, for example, when the ambient light is present, but is not enough to achieve a bright display of colors. This intermediate or transmissive/reflective mode is shown in Fig. 1C.

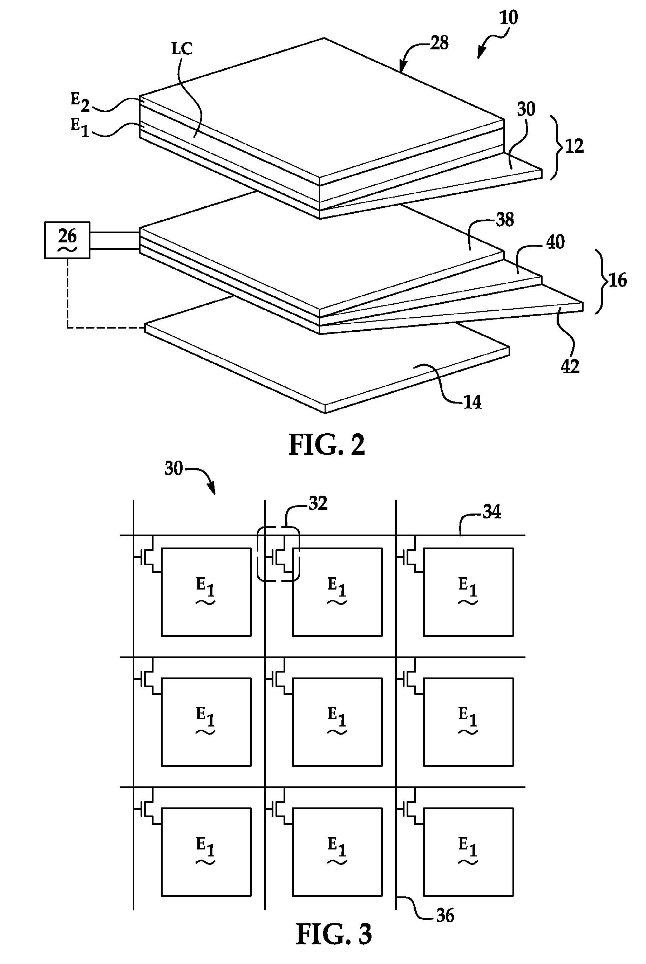

Referring now to Fig. 2, an example of the transflective display 10 is depicted. Generally, the transflective display10 includes the backlight 14, the display stack 12, the white electro-optic layer 16, and a light sensor 26 operatively connected to the white electro-optic layer 16.

The backlight 14 is positioned at the back of the display 10 so that when operating in transmissive or transmissive/reflective mode, at least some light from the backlight 14 is directed through the various layers 12, 16 so that the display is illuminated. An example of a suitable backlight 14 is a neutral white backlight. It is to be understood that in order to meet the neutral white requirement in this example, the spectral performance of the backlight 14 may vary depending upon the technology used. Examples of suitable backlights include cold cathode fluorescent lamps (CCFL), light emitting diodes (LED), and quantum dot backlights.

In the examples disclosed herein, the display stack 12 is adjacent the backlight 14, and the white electro-optic layer 16 is positioned between the display stack 12 and the backlight 14. The display stack 12 may be pixelated so that different pixels may be addressed individually. In one example, the pixels are defined by electrodes that switch the liquid crystal LC. In contrast, the white electro-optic layer 16 may be non-pixelated, at least in part because it operates as a white diffuse reflector across the display surface or as a transparent layer in the transmissive mode across the display surface.

In one example, the display stack 12 includes a liquid crystal layer 28 and an addressing layer 30 operatively connected to the liquid crystal layer 28. This system includes two electrodes E₁, E₂ at opposite ends of the liquid crystal LC. The voltage applied to the respective surrounding electrode(s) E₁, E₂ may alter the alignment of the liquid crystal LC to control the transmission of light. In one example, the electrode(s) E₁, E₂ is/are made of a material that is both electrically conductive and optically transparent. Examples of suitable electrode E₁, E₂ materials include indium tin oxide (ITO) or polyethylenedioxythiophene polystyrenesulfonate (PEDOT:PSS), single wall or multi-wall carbon nanotubes, silver nanowires, etc.

The liquid crystal layer 28 may include twisted nematic liquid crystals between two crossed polarizers (not shown). Depending on whether a voltage is applied, the liquid crystal with the polarizers acts as an electro-optic shutter. In the examples disclosed herein, it is desirable that the liquid crystal properties include material stability, a wide temperature range for storage, and a low viscosity for a fast response. It is believed that stability is related to storage temperature, and that liquid crystals should be stable at various temperatures, for example, from about -50°C to about 100°C. Viscosity, especially rotational viscosity, plays a role in the liquid crystal display response time. The response time of a nematic liquid crystal device is linearly proportional to rotational viscosity, and the rotational viscosity of aligned liquid crystals depends on the molecular constituents, structure, intermolecular association, and temperature. Examples of suitable liquid crystals includes substituted phenyl-cyclohexane liquid crystals, cyano-biphenyl liquid crystals, substituted (1,1'-bicyclohexyl)-4-ylbenzene liquid crystals, substituted tolane liquid crystals, substituted diphenyl-diacetylene liquid crystals, substituted diphenyl-hexendiyne liquid crystals, and substituted bistolane liquid crystals.

While not shown, it is to be understood that spacer beads may be used to define the gap between the substrates (e.g., electrodes E₁, E₂) that contain the liquid crystal LC.

Each pixel in the display stack 12 may be addressed using the addressing layer 30. One example of the addressing layer is shown in Fig. 3. The addressing layer 30 shown in Fig. 3 utilizes active matrix addressing and thus includes a switching device 32. While not shown, it is to be understood that the addressing layer may also be configured for passive addressing, where the liquid crystal layer 28 has a threshold for switching and may have some inherent memory. In passive addressing, there may not be a switching device 32. The device 10 may also be a direct drive device, where each pixel of the display 10 is individually connected to a driving electrode.

According to one example, the addressing layer 30 includes a number of horizontal lines 34 and a number of vertical lines 36. In the example shown in Fig. 3, the switching device 32 is operatively connected at each intersection between the horizontal lines 34 and vertical lines 36. Each switching device 32 is also connected to one of the electrodes (e.g., electrode E₁) of the liquid crystal layer 28. In the example shown in Fig. 2, the addressing layer 30 may be integrated into the stack 12 between the electrode E₁ and an electrode 38 of the white electro-optic layer 16. As previously discussed, depending on an electric signal received by the electrode E₁ through the switching device 32, the alignment of the liquid crystal LC may change.

One type of switching device 32 that may be used is a transistor, such as thin film transistors (TFT) or a Metal-Insulator-Semiconductor Field Effect Transistor (MISFET) device. Transistors generally include three terminals: a gate, a drain, and a source; however, there are many transistor configurations (e.g., N-channel or P-channel devices, etc.). If the signal supplied to the gate of a P channel MISFET device is beyond a threshold voltage, then the transistor may be in an ON state, allowing electric current to pass between the drain and a source. If a transistor is in an OFF state, then electric current is prohibited from flowing between the source and the drain. A TFT includes layers of semiconductor material and conductive material that are deposited onto a transparent substrate in thin films. The thin nature of TFTs may be particularly suitable for flat panel displays.

The gate terminal of each switching device 32 may be connected to a vertical line 36, while the source terminal of each switching device 32 may be connected to a horizontal line 34, or vice versa. If the switching devices 32 are P channel devices, then a signal received along the vertical line 36 may switch the transistors along that line into an ON state. If a transistor is in an ON state and receives a signal from a horizontal line 34, the signal may flow through the transistor to the electrode E₁. Thus, the electrical state of an individual electrode E₁ may be changed by signals received through the addressing matrix 30.

In some examples, a capacitive device may be used with each transistor. The capacitive device may hold the electrode E₁ in its assigned state until the next refresh cycle of the display 10. Typical display devices 10 include a refresh cycle in which the state of each pixel is refreshed at regular intervals. These regular intervals are typically faster than the human eye is able to detect.

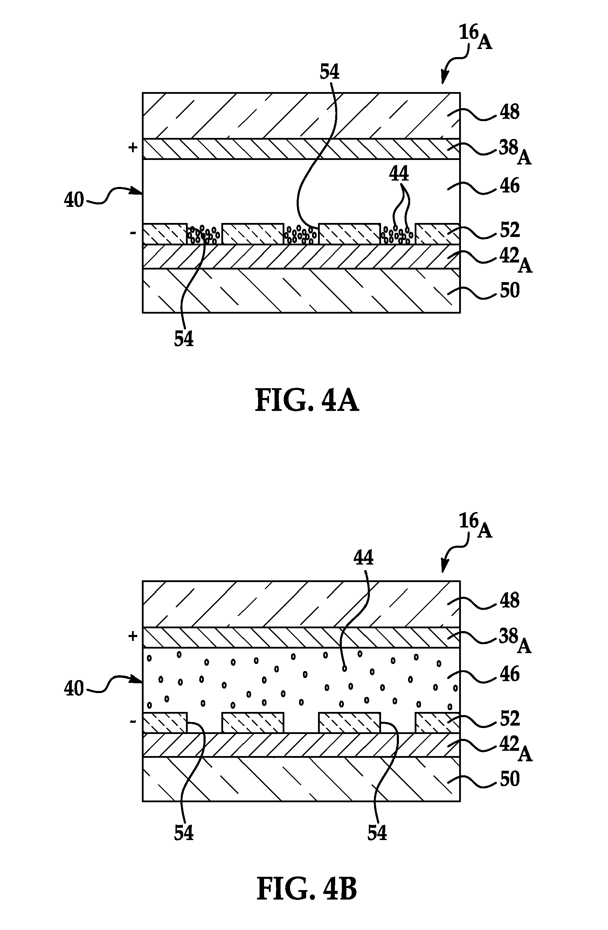

Referring back to Fig. 2, the display 10 also includes the white electro-optic layer 16. As will be discussed further herein, the white electro-optic layer 16 is switchable between a white reflective mode and a clear transmissive mode, or any state between these two modes. Generally, the white electro-optic layer 16 may be an in-plane electrophoretic device or an electrokinetic device. Examples of each of these devices will be described further in reference to Figs. 4A-5C and 8A-9B.

Each example of the white electro-optic layer 16 includes two electrodes 38, 42 that have a space defined therebetween. The space between the electrodes 38, 42 is filled with a white pigment particle dispersion 40. It is to be understood that any of the configurations of the white electro-optic layer 16 disclosed herein may include layers that seal the space between the two electrodes 38, 42.

The white pigment particle dispersion (i.e., white ink) 40 includes a carrier fluid (shown at reference numeral 46 in Figs. 4A, 4B, 5A-5C, 8A, 9A and 9B) having white pigment particles (see reference numeral 44 in Figs. Figs. 4A, 4B, 5A-5C, 8A, 9A and 9B) dispersed therein. As used herein, the term "carrier fluid" refers to a fluid that fills up a viewing area defined in a display and is generally configured as a vehicle to carry white particles therein. In response to a sufficient electric potential or field applied to the colorant particles while driving electrodes of the display 10, the white particles tend to move and/or rotate to various spots within the viewing area in order to produce a desired visible effect. Any suitable carrier fluid 46 may be used including a non-polar fluid (i.e., a fluid having a low dielectric constant k such as, e.g., less than about 20, or, in some cases, less than about 2), or an anisotropic fluid (e.g., liquid crystals). It is believed that an anisotropic fluid contributes to the bistability of the display 10 in either the transmissive mode or the reflective mode. Examples of suitable non-polar carrier fluids include hydrocarbons, halogenated or partially halogenated hydrocarbons, and/or siloxanes. Some specific examples of non-polar carrier fluids include perchloroethylene, cyclohexane, dodecane, mineral oil, isoparaffinic fluids, cyclopentasiloxane, cyclohexasiloxane, cyclooctamethylsiloxane, and combinations thereof. Such fluids tend to reduce leakages of electric current when driving the display 10, as well as increase the electric field present in the fluid. It is to be understood that the carrier fluid 46 may be any suitable medium for enabling fluidic motion of charged particles.

The white pigment particles 44 are dispersed in the carrier fluid 46. In one example, the white pigments 44 are made up of a charged material that is able to hold a stable charge indefinitely so that repeated operation of the display 10 does not affect the charge on the pigments 44. It is to be understood that white pigments 44 that have a finite ability to hold a stable charge may also be used in the examples disclosed herein, while they maintain their charge. The white pigments 44 have the property producing a light scattering. As a result, the particles appear white, which provides a desired optical effect. In one example, the white pigments 44 are chosen from titanium dioxide, silicon dioxide zinc oxide, zinc sulfide, antimony oxide, zirconium oxide, zirconium silicate, and combinations thereof. The diameter of each of the white pigments 44 generally ranges from about 100 nm to about 1 µm. In one example, the diameter of each of the white pigments 44 ranges from about 150 nm to about 250 nm. It is to be understood that pigments 44 having the same average diameter may be used, or pigments 44 having a plurality of different diameters may be used. The size of the pigments 44 selected may depend, at least in part, upon the visible wavelengths that are to be absorbed and/or scattered. For example, including multiple sized pigments 44 provides scattering at various wavelengths across the visible spectrum. The size of the pigment particles 44 used may also depend upon the refractive index of the material selected as the pigments 44.

The white pigment particle dispersion 40 may include any desirable amount of pigments 44 in the carrier fluid 46. The amount depends, at least in part, upon the desired look of the display 10 during reflective mode. Generally, less than 50 wt% of the dispersion 40 is made up of pigments 44. In one example, the concentration of pigment 44 included in the dispersion 40 ranges from about 0.5 wt% to about 20 wt%. In other examples, the concentration of the pigment 44 ranges from about 1 wt% to about 10 wt%.

The white pigments 44 are generally not self-dispersing in the non-polar carrier fluid 46. As such, the ink 40 may also include one or more dispersants. Examples of dispersants include hyperdispersants such as those of the SOLSPERSE® series manufactured by Lubrizol Corp., Wickliffe, OH (e.g., SOLSPERSE® 3000, SOLSPERSE® 8000, SOLSPERSE® 9000, SOLSPERSE® 11200, SOLSPERSE® 13840, SOLSPERSE® 16000, SOLSPERSE® 17000, SOLSPERSE® 18000, SOLSPERSE® 19000, SOLSPERSE® 21000, and SOLSPERSE ® 27000); various dispersants manufactured by BYKchemie, Gmbh, Germany, (e.g., DISPERBYK® 110, DISPERBYK® 163, DISPERBYK® 170, and DISPERBYK® 180); various dispersants manufactured by Evonik Goldschmidt GMBH LLC, Germany, (e.g., TEGO® 630, TEGO® 650, TEGO® 651, TEGO® 655, TEGO® 685, and TEGO® 1000); and various dispersants manufactured by Sigma-Aldrich, St. Louis, MO, (e.g., SPAN® 20, SPAN® 60, SPAN® 80, and SPAN®85). In some examples, the concentration of dispersant in the white ink 40 may range from about 0.5 wt% to about 20 wt%. In other examples, the concentration of the dispersant may range from about 1 wt% to about 10 wt%.

In some examples of the white ink 40, a charge director is included. As used herein, the term "charge director" refers to a material that, when used, facilitates charging of the white particles 44. In an example, the charge director is basic and reacts with the acid-modified white particle to negatively charge the particle 44. In other words, the charging of the particle 44 is accomplished via an acid-base reaction between the charge director and the acid-modified particle surface. It is to be understood that the charge director may also be used in the white ink 40 to prevent undesirable aggregation of the white pigment particles 40 in the carrier fluid 46. In other cases, the charge director is acidic and reacts with the base modified white particle to positively charge the particle 44. Again, the charging of the particle 44 is accomplished via an acid-base reaction between the charge director and the base-modified particle surface. The charge director may be selected from small molecules or polymers that are capable of forming reverse micelles in the carrier fluid 46. Such charge directors are generally colorless and tend to be dispersible or soluble in the carrier fluid 46. In an example, the charge director is selected from a neutral and non-dissociable monomer or polymer such as, e.g., polyisobutylene succinimide amines. Another example of the charge director includes an ionizable molecule that is capable of disassociating to form charges. Examples of such charge directors include sodium di-2-ethylhexylsulfosuccinate and dioctyl sulfosuccinate. Yet another example of the charge director includes a zwitterion charge director such as, e.g., lecithin.

In any of the examples of the white ink described herein, the balance of the ink 40 is the carrier fluid 46.

Various examples of suitable configurations of the white electro-optic layer 16 will now be described in reference to Figs. 4A through 9B. While multiple examples are provided herein, it is to be understood that the components of the electro-optic layer 16 may have any geometry that enables the white pigments 44 to be switched from a transmissive mode to a reflective mode. Furthermore, it is to be understood that any of the examples may be used in the display 10.

Figs. 4A and 4B illustrate one example of the white electro-optic layer 16_{A} in the transmissive mode and the reflective mode, respectively. This example of the white electro-optic layer 16_{A} includes electrodes 38_{A}, 42_{A} deposited onto respective opposed and substantially parallel substrates 48, 50. In this example, the electrodes 38_{A}, 42_{A} are deposited as blanket layers onto the respective substrates 48, 50. As such, the electrodes 38_{A}, 42_{A} and the substrates 48, 50 are transparent. Examples of suitable transparent electrode materials include carbon nanotube layers, transparent conducting oxides (such as ITO (Indium Tin Oxide)), or transparent conducting polymers (such as PEDOT (poly 3,4-ethylenedioxythiophene)). Examples of suitable transparent substrate materials include plastic (e.g., polyethylene terephthalate (PET), polyethersulfone (PES), polyethylene naphthalate (PEN), etc.), glass, or another suitable optically clear/transparent material.

While not shown in Figs. 4A and 4B, it is to be understood that layers may connect the substrates 48, 50 in a manner that seals the white pigment dispersion 40 in the space between the electrodes 38_{A}, 42_{A}. The layers may be structures that are defined on the opposing substrate or structures that are defined in the dielectric layer 52.

In this example of the white electro-optic layer 16_{A}, a dielectric layer 52 is deposited and patterned on the electrode 42_{A}. The pattern of the dielectric layer 52 includes a plurality of recesses 54 having a predetermined shape. The recesses 54 allow the charged white pigments 44 to compact therein in response to a suitable bias being applied to the electrodes 38_{A}, 42_{A}. As shown in Figs. 4A and 4B, the dielectric layer 52 may be patterned so that the electrode 42_{A} is exposed at each of the recesses 54. In another example, the dielectric layer 52 may be patterned to be thin enough at each of the recesses 54 so that the recesses 54 are electrically active. In other words, a thin portion of the dielectric layer 52 may remain in the recesses 54 so long as the electrode 42_{A} is electrically coupled to the white pigment dispersion 40 in the recesses 54. In this example, the thicker portion of the dielectric layer 52 (i.e., where recesses 54 are not formed) acts as an insulator between the electrode 42_{A} and the white pigment dispersion 40.

Examples of materials suitable for the dielectric layer 52 include some UV curable resins, photoimagable resins, other plastics, and various oxides.

Fig. 4A illustrates the white pigments 44 in a compacted state or transmissive mode. In this mode, light 18 from the backlight 14 is allowed to pass through the display 10. Fig. 4B illustrates the white pigments 44 in a spread state or reflective mode. In this mode, the white pigments 44 scatter incoming photons (from an ambient light source, e.g., light 20) back to a viewer 24, and the backlight 14 is not utilized.

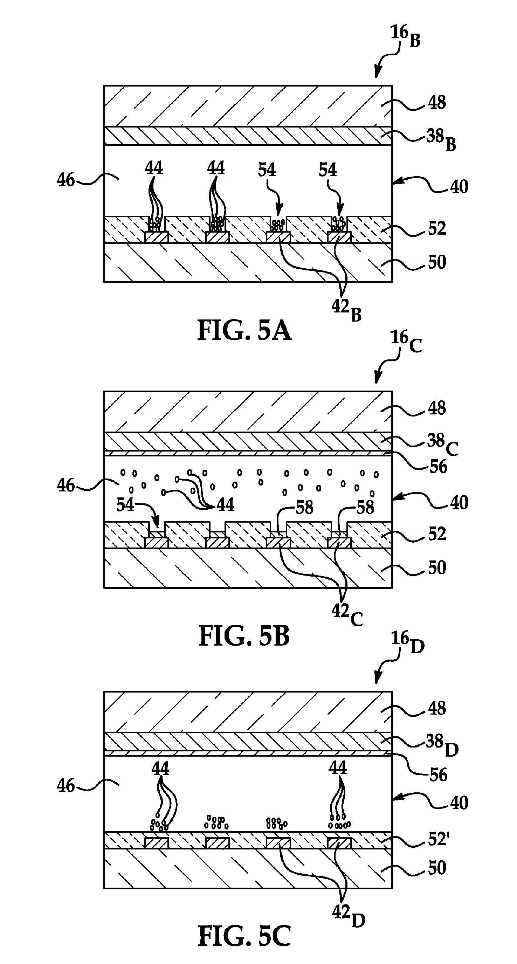

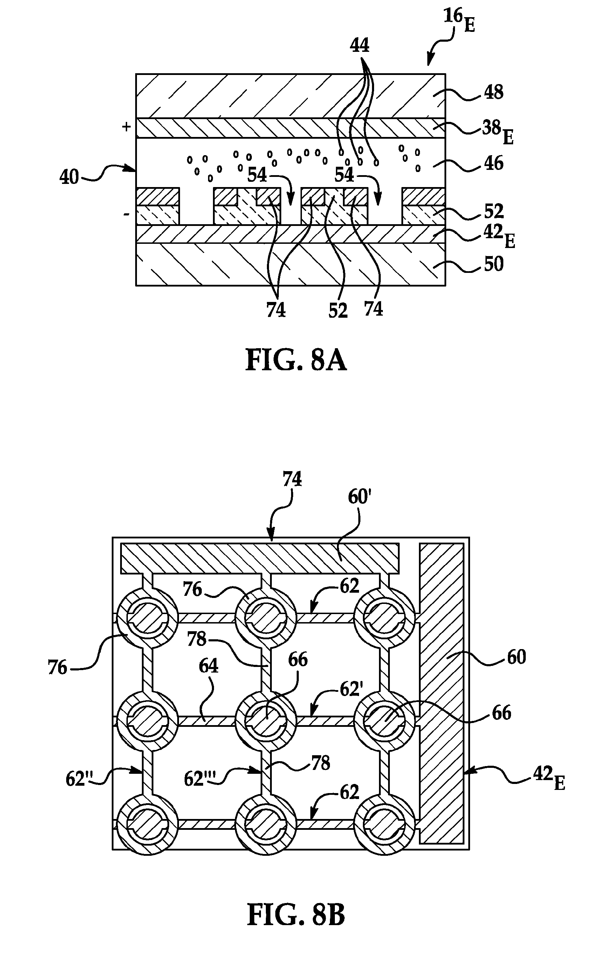

Figs. 5A-5C illustrate other examples of the white electro-optic layer 16_{B}, 16_{C}, 16_{D}. The examples shown in Figs. 5A and 5C are in transmissive mode, while the example shown in Fig. 5B is in reflective mode. In these examples (and in the example described in reference to Figs. 8A and 8B), at least one of the electrode(s) 38, 42 is a conductive line, mesh, or lattice electrode. Conductive line, mesh, or lattice electrode(s) can be configured to improve the transparency of these examples of the white electro-optic layer 16. The transparency is a function of the clear aperture, which is defined as the area not occupied by conductive wires if the absorption through any substrate and dielectric layers of the display 10 is assumed to be negligible. In one example, the line width of the conductive wires (electrodes shown in Figs. 5A through 8B) can be a few microns or sub-microns to maximize the clear aperture such that the transparency of the display 10 is 90% or better.

The white electro-optic layer 16_{B} of Fig. 5A includes the transparent substrate 50 parallel to and opposite the transparent substrate 48.

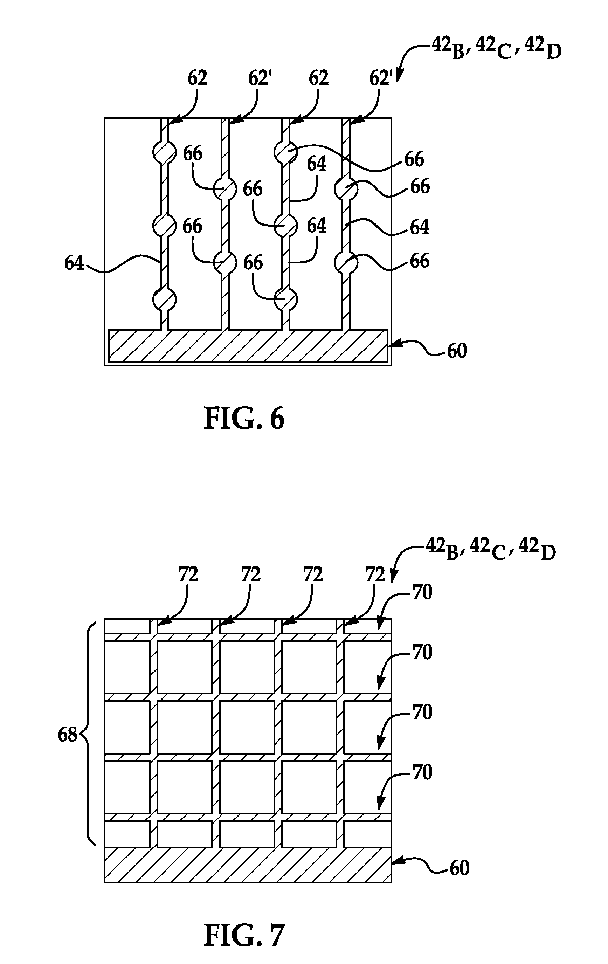

In this example, the electrode 42_{B} is a reservoir electrode and is parallel to and opposite electrode 38_{B}. The electrode 42_{B} includes segments of a segmented or pixelated conductor formed on the substrate 50. Two examples of this type of electrode 42_{B} are shown and described further in reference to Figs. 6 and 7. Examples of suitable materials for the electrode 42_{B} include any suitable conductor, such as a metal, silver nanowires, or carbon nanotubes. In this example, the electrode 38_{B} is a continuous, blanket, or solid plate electrode formed on substrate 48. The electrode 38_{B} may be formed of a transparent conductive material, such as those previously described.

In this example, the dielectric layer 52 is formed on substrate 50 and on a portion of the electrode 42_{B}. The dielectric layer 52 is deposited (or deposited and patterned) with recesses 54 that allow charged white particles 44 to compact on exposed portions of the electrode 42_{B} in response to a suitable bias being applied to electrode 42_{B} with respect to electrode 38_{B}.

The white electro-optical layer 16_{B} is shown in a clear optical state (i.e., transmissive mode). In this example, the clear optical state is provided by applying a negative bias to electrode 42_{B} relative to a reference bias applied to electrode 38_{B}. The negative bias applied to electrode 42_{B} provides an electrophoretic pull that attracts positively charged white pigments 44. As a result, the white pigments 44 are compacted on the surface of electrode 42_{B} within recesses 54. It is to be understood that the white particles 44 in any of the examples disclosed herein can be charged in either polarity, and therefore, the bias required to move them will vary accordingly.

In one example, the positively charged white pigments 44 can be electrophoretically and convectively moved to electrode 42_{B} and held there by the negative bias applied to electrode 42_{B} relative to electrode 38_{B}. In one example, the convective flow is a transient effect caused by the ionic mass transport in the carrier fluid 46, without charge transfer between the carrier fluid 46 and electrode 42_{B}. In this case, the convective flow proceeds for a finite amount of time and facilitates the compaction of white pigments 44 on electrode 42_{B} in recesses 54. After compaction, the white pigments 44 are held on electrode 42_{B} within recesses 54 by electrostatic forces generated by a coupling with electrode 42_{B}.

In another example, the convective flow is induced by ionic mass transport in the carrier fluid 46 and by charge transfer between the carrier fluid 46 and electrode 42_{B} and electrode 38_{B}. The charge transfer can occur when the carrier fluid 46 is coupled to the electrodes 38_{B}, 42_{B} either through direct contact with the electrodes 38_{B}, 42_{B} or separated from the electrodes 38_{B}, 42_{B} by an intermediate layer including one or more materials. In the latter case, charge transfer is facilitated by the internal electrical conductivity of the intermediate layer, either volumetric or via pinholes and other defects.

Fig. 5B illustrates another example of the white electro-optic layer 16_{C.} This example is similar to the example shown in Fig. 5A, except that the white electro-optic layer 16_{C} includes dielectric passivation layers 56 and 58. The first dielectric passivation layer 56 is formed in direct contact with the electrode 38_{C}. The second dielectric passivation layer 58 includes separate layers that are self-aligned over the electrode 42_{C} within recesses 54 of the dielectric layer 52. In another example that is not shown, the second dielectric passivation layer 58 may be formed continuously over electrode 42_{C} and substrate 50. In still another example that is not shown, the first dielectric passivation layer 56 can be excluded while the second dielectric passivation layer(s) 58 is/are included.

The dielectric passivation layers 56, 58 exhibit non-linear resistance. As used herein, the dielectric material exhibiting non-linear resistance is one whose resistance decreases with applied voltage. In the examples disclosed herein, the electrical current passing through a non-linear resistance dielectric exhibits threshold behavior where the current is essentially zero when the applied electric field is below a threshold value, and increases above this threshold value. As such, the non-linear resistance dielectric acts as a conductor at voltages exceeding the threshold, but acts as a charge-blocking device at voltages below the threshold. Since the threshold voltage is dictated by the current density, the display 10 may be configured to exhibit any threshold value that corresponds with the current density of the selected material. More particularly, the dielectric passivation layer 56, 58 provides a selective barrier for current flow, and thus introduces a threshold voltage value to the white electro-optic layer 16 so that the white electro-optic layer 16 changes its optical state when the applied electric potential is above the threshold, but does not change its optical state when the applied electric potential is below the threshold.

It is believed that the dielectric passivation layers 56, 58 are capable of exhibiting non-linear resistance behavior with donors (i.e., Poole-Frenkel effect), with defects (i.e., abnormal Pool-Frenkel effect) and/or with tunneling (e.g., in the case of SiNₓ). While all three mechanisms may contribute to the selective conductivity of the passivation layers 56, 58, it is believed that the main mechanism contributing to the non-linear resistance behavior of Ta₂O₅ is the Poole-Frenkel effect, and that the main mechanism contributing to the non-linear resistance behavior of SiNₓ is tunneling. Examples of suitable dielectric materials that exhibit non-linear resistance include anodized Ta₂O₅ SiNₓ (i.e., amorphous silicon nitride prepared via plasma enhanced chemical vapor deposition (PECVD) or another similar technique, which may include up to 30% of hydrogen, and may be represented by a-SiN_{x:}H where x ranges from 1 (e.g., SiNH) to 1.3 (e.g., Si₃N₄)), or oxides prepared via the oxidation of tantalum or tantalum alloys (e.g., tantalum aluminum, tantalum niobium, tantalum tungsten, etc.), or combinations thereof. The example of the white electro-optic layer 16_{C} shown in Fig. 5B is in the reflective mode. The spread state of the white pigments 44 is provided by applying pulses or no bias to electrode 42_{C} relative to the reference bias applied to electrode 38_{C}. The pulses or no bias applied to electrode 42_{C} spread the white pigments 44 throughout the space between the electrodes 42c, 38_{C}.

Fig. 5C illustrates still another example of the white electro-optic layer 16_{D}. This example is similar to the example shown in Fig. 5B, except that the white electro-optic layer 16_{D} includes the dielectric layer 52' established over the substrate 50 and the electrode 42_{D}. This example of the dielectric layer 52' does not include recesses 54, but rather is thin enough over the electrode 42_{D} to render the areas adjacent to the electrode 42_{D} electrically active.

The white electro-optic layer 16_{D} is shown in the transmissive mode. This mode is obtained, for example, by applying a negative bias to electrode 42_{D} relative to a reference bias applied to electrode 38_{D}. The negative bias applied to electrode 42_{D} provides an electrophoretic pull that attracts positively charged white pigments 44. As a result, the white pigments 44 are compacted on the surface of dielectric layer 52' adjacent to electrode 42_{D}.

Referring now to Fig. 6, a top view of one example of the electrode 42_{B}, 42c, 42_{D} is depicted. This example of the electrode 42_{B}, 42c, 42_{D} includes a conductive common contact region 60 and conductive lines 62, 62' that are coupled to the conductive common contact region 60. While a total of four lines 62, 62' is illustrated in Fig. 6, it is to be understood that any number of conductive lines 62, 62' can be coupled to the common contact region 60.

In this example, the conductive lines 62, 62' include line regions 64 and dot regions 66. In one example, the dot regions 64 have a greater cross-sectional width than the line regions 64. Each conductive line 62, 62' is coupled to the common contact region 60 via a line region 64. Furthermore, each dot region 66 is connected to an adjacent dot region 66 by a line region 64. In one example, each dot region 66 is aligned with a recess 54 or electrically active area (e.g., in Fig. 5C). Each line region 64 and the common contact region 60 are covered by the dielectric layer 52, 52'. In the example illustrated in Fig. 6, the dot regions 66 of each conductive line 62 are offset from the dot regions 66 of each conductive line 62'. In this example, first conductive lines 62 and second conductive lines 62' alternate and are equally spaced from each other. In another example which is not shown, the dot regions 66 of each conductive line 62 are aligned with the dot regions 66 of each conductive line 62'. In still another example which is not shown, the spacing between the conductive lines 62, 62' varies aperiodically, and the spacing between each dot region 66 along each conductive line 62, 62' may also vary aperiodically. In a further example which is not shown, the conductive lines 62, 62' may not have dot regions 66 and the spacing between the conductive lines 62, 62' may vary aperiodically, and the shape of each conductive line 62, 62' may be distorted.

The dot regions 66 disclosed herein may have any suitable geometry, including circular, diamond shaped, circular with a triangular shaped portion removed, circular with four triangular portions removed, triangular shaped, polygonal shaped, or the like.

Referring now to Fig. 7, a top view of another example of the electrode 42_{B}, 42_{C}, 42_{D} is depicted. This example of the electrode 42_{B}, 42_{C}, 42_{D} includes the common contact region 60 and a mesh 68 coupled to the common contact region 60. The mesh 68 includes first conductive lines 70 and second conductive lines 72. In the example shown in Fig. 7, the first conductive lines 70 are perpendicular to the second conductive lines 72. In one example, the intersection of each first conductive line 70 and each second conductive line 72 is aligned with a recess 54 or electrically active area (e.g., in Fig. 5C). The remaining portions of the first and second conductive lines 70, 72 and the common contact region 60 are covered by the dielectric layer 52, 52'.

The mesh 68 may be designed in other configurations that are not shown herein. In one example, a dot region (e.g., similar to reference numeral 66 shown in Fig. 6) may be positioned at the intersection of each first conductive line 70 and each second conductive line 72. These dot regions may be respectively aligned with the recesses 54 or the electrically active areas of dielectric layer 52'.

In another example, the conductive lines 70, 72 are formed into a conductive hexagonal lattice structure that is coupled to the common contact region 60. The relative width and size of such a conductive hexagonal lattice structure may be optimized to provide a clear aperture. In one example, the width of each line segment is 4.0 µm, the length of each line segment is 73.5 µm, and the radius of each hexagon is 63.7 µm to provide a clear aperture of 94%. In another example, the width of each line segment is 4.0 µm, the length of each line segment is 42.7 µm, and the radius of each hexagon is 37.0 µm to provide a clear aperture of 90%. In yet another example, the width of each line segment is 4.0 µm, the length of each line segment is 29.5 µm, and the radius of each hexagon is 25.5 µm to provide a clear aperture of 86%. It is to be understood that other suitable values for W, L, and R may be used to provide the desired clear aperture.

Referring now to Figs. 8A and 8B respectively, a cross-sectional and a top view of another example of the white electro-optic layer 16_{E} are depicted. This example of the layer 16_{E} includes the substrate 50, electrode 42_{E}, a dielectric layer 52 including recesses 54, a white pigment dispersion 40, a gate electrode 74, electrode 38_{E}, and substrate 48. As illustrated, the gate electrode 74 is adjacent to the top of the recesses 54.

As shown in Fig. 8B, the electrode 42_{E} is a reservoir electrode and includes a conductive common contact region 60 and conductive lines 62, 62' coupled to the common contact region 60. The conductive lines 62, 62' include dot regions 66 and line regions 64 between dot regions 66. The gate electrode 74 includes a conductive common contact region 60' and conductive lines 62", 62'" coupled to common contact region 60'. The conductive lines 62", 62'" of the gate electrode 75 include ring regions 76 and line regions 78 between ring regions 76. Each ring region 76 surrounds a respective recess 54 and is aligned with a dot region 66 of the electrode 42_{E}. In one example, electrode 42_{E} and gate electrode 74 are made from the same conductive material. In another example, electrode 42E and gate electrode 74 are passivated by a dielectric passivation layer to electrically isolate these components from the white pigment dispersion 40.

The gate electrode 74 may be used to control the movement of the white pigments 44 into and out of recesses 54. The gate electrode 74 may also be used to control an amount of the white pigments 44 released from recesses 54 and moved into the space between the electrodes 42_{E}, 38_{E}.

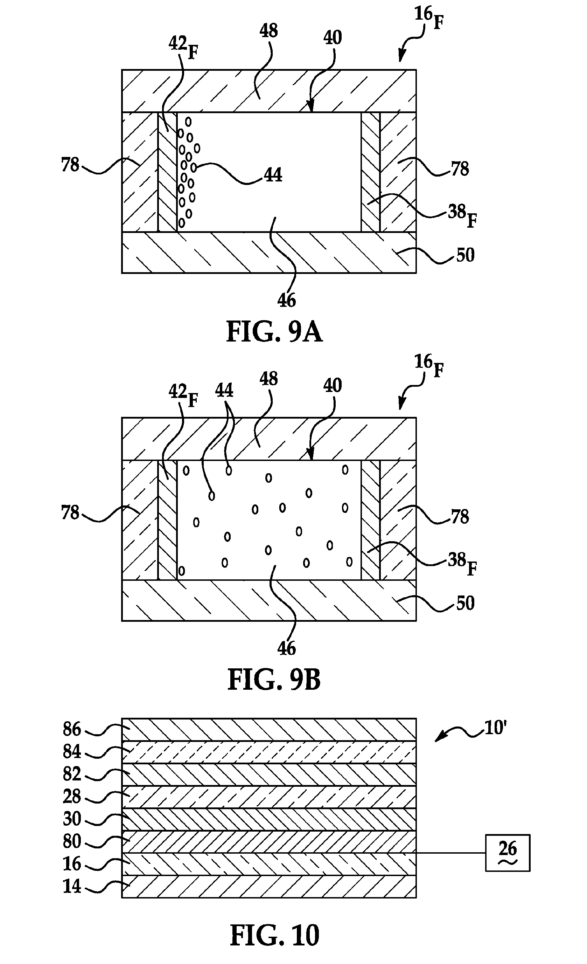

Figs. 9A and 9B illustrate still another example of the white electro-optic layer 16_{F}. Fig. 9A shows the white electro-optic layer 16_{F} in the compacted state/transmissive mode and Fig. 9B shows the white electro-optic layer 16_{F} in the spread state/reflective mode.

The example shown in Figs. 9A and 9B is an in-plane electrophoretic device. The electrodes 38_{F}, 42_{F} in this example are oriented perpendicularly to the substrates 48, 50 and are aligned with posts 78 that separate the two substrates 48, 50. The electrodes 38_{F}, 42_{F} may also be fabricated as strip lines along the substrate 50 that are not in contact with the substrate 48.

In the device shown in Figs. 9A and 9B, if positively charged white particles 44 are utilized, such particles 44 may be collected at electrode 42_{F} by applying a negative voltage to the electrode 42_{F} relative to the voltage on electrode 38_{F}. The particles 44 move by electrophoresis in the applied electric field.

Referring back to Fig. 2, one example of the display 10 further includes a light sensor 26. The light sensor 26 is operatively and electrically connected to the electrodes 38, 42 of the white electro-optic layer 16. The sensor 26 detects the ambient light to which the display 10 is exposed, and adjusts the amount of voltage it transmits to the electrodes 38, 42 of the white electro-optic layer 16 to modulate the state of the white pigments 44 in the layer 16. This sensor 26, and its corresponding drive circuitry, automatically tune the white electro-optic layer 16 to the transmissive mode, the reflective mode, or to a state somewhere between the transmissive and reflective modes, depending upon the ambient lighting conditions. When the ambient light is present, but is not sufficient to effectively illuminate the display 10, the light sensor 26 will transmit a voltage that allows some of the pigments 44 to be compacted and others to be spread. This enables ambient light 20 to be reflected and light 18 from backlight 14 to pass through the display 10. The amount of compaction and spreading will vary depending upon the amount of ambient light detected by the sensor 26.

One example of a suitable ambient light sensor 26 is a photocell (e.g., Si photodetectors, light-dependent resistors (LDR), photoresistors, photodiodes, or the like). It is to be understood that additional electronics may be operatively connected to the ambient light source 26 and the electrodes 38, 42 of the white electro-optic layer 16 in order to drive the white electro-optic layer 16 in response to the sensed light.

The light sensor 26 is also operatively connected to the backlight 14. When sufficient ambient light is detected for the white electro-optic layer 16 to be in the fully reflective mode, the light sensor 26 transmits a signal to the backlight 14 to turn off. Similarly, when the amount of ambient light detected by the light sensor 26 is insufficient to illuminate the display screen, the light sensor 26 transmits a signal to the backlight 14 to turn on. In dark environments where the white electro-optic layer is in the transparent state, the backlight 14 may be dimmed.

It is to be understood that the display 10 shown in Fig. 2 is one example, and that additional optical and/or alignment layers/components may be added as desired. For example, the display 10 may include polarizer(s), quarter waveplate(s), transparent conductive layer(s), color filter(s), etc. One specific example of the display 10' including additional layers/components is shown in Fig. 10.

In this example of the display 10', two polarizer(s) 80 and 86, a color filter 84, and a transparent conducting layer 82 are included. One polarizer 80 is a horizontally oriented polarizer and is located between the white electro-optic layer 16 and the addressing layer 30, and the other polarizer 86 is a vertically oriented polarizer located at the top of the display 10' (i.e., further from the backlight 14). The color filter 84 and transparent conducting layer 82 are positioned between the liquid crystal layer 28 and the vertically oriented polarizer 86.

The additional optical and/or alignment layers/components that are utilized depend, at least in part, on the liquid crystal structure that is utilized. For example, some liquid crystal structures require two polarizers (as shown in Fig. 10 with a crossed-polarizer configuration); some liquid crystal structures require a single polarizer and a quarter waveplate (e.g., in a crossed-polarizer configuration); some liquid crystal structures require a single polarizer and no quarter waveplate (e.g., in a parallel-polarizer configuration); and some liquid crystal structures require no polarizers but do require a quarter waveplate (e.g., the Cole-Kashnow configuration and other guest-host configurations).

It is to be understood that the ranges provided herein include the stated range and any value or sub-range within the stated range. For example, a size ranging from about 1 nm to about 1 µm should be interpreted to include not only the explicitly recited amount limits of about 1 nm to about 1 µm, but also to include individual amounts, such as 10 nm, 50 nm, 220 nm, etc., and sub-ranges, such as 50 nm to 500 nm, etc. Furthermore, when "about" is utilized to describe a value, this is meant to encompass minor variations (up to +/- 5%) from the stated value.

While several examples have been described in detail, it will be apparent to those skilled in the art that the disclosed examples may be modified. Therefore, the foregoing description is to be considered non-limiting.

## Claims

1. A transflective display, comprising:
a backlight;
a display stack, including:
a liquid crystal layer; and
an addressing layer operatively connected to the liquid crystal layer; and
a white electro-optic layer positioned between the backlight and the display stack.

2. The transflective display as defined in claim 1, further comprising a light sensor operatively connected to the white electro-optic layer, the light sensor controlling a state of the white electro-optic layer between a transmissive mode and a reflective mode in response to ambient lighting conditions.

3. The transflective display as defined in claim 1 wherein the white electro-optic layer includes:
first and second electrodes defining a space therebetween;
a carrier fluid occupying the space between the first and second electrodes;
white pigments present in the carrier fluid; and
a dispersant present in the carrier fluid.

4. The transflective display as defined in claim 3 wherein the white pigments are chosen from titanium dioxide, silicon dioxide, zinc oxide, zinc sulfide, antimony oxide, zirconium oxide, zirconium silicate, and combinations thereof.

5. The transflective display as defined in claim 4 wherein a diameter of each of the white pigments ranges from about 100 nm to about 1 µm.

6. The transflective display as defined in claim 4 wherein the white pigments include a plurality of pigment particles with different diameters.

7. The transflective display as defined in claim 3, further comprising a dielectric layer on the first electrode, the dielectric layer having recess regions formed therein that are electrically active.

8. The transflective display as defined in claim 3 wherein the carrier fluid is chosen from a non-polar fluid and an anisotropic fluid.

9. The transflective display as defined in claim 3 wherein the first electrode includes a plurality of line electrodes, wherein the second electrode is a blanket transparent electrode, and wherein in response to a bias applied to the electrodes, the white pigments are moved to a transmissive mode, a reflective mode, or an intermediate mode.

10. The transflective display as defined in claim 1, further comprising any of a polarizer, a quarter waveplate, or combinations thereof.

11. The transflective display as defined in claim 1 wherein the liquid crystal layer has first and second sides, wherein a first side is positioned adjacent to the addressing layer, and wherein the display stack further comprises:
a transparent conductive layer positioned adjacent to the second side of the liquid crystal layer; and
a color filter positioned adjacent to the second side of the liquid crystal layer.

12. The transflective display as defined in claim 1 wherein the display stack is pixelated and wherein the white electro-optic layer is non-pixelated.

13. A transflective display, comprising:
a backlight;
a white electro-optic layer having first and second sides opposed to one another, the first side of the white electro-optic layer being positioned adjacent to the backlight;
a light sensor operatively connected to the white electro-optic layer to control a voltage signal transmitted to the white electro-optic layer;
an addressing layer having first and second sides opposed to one another, the first side of the addressing layer being positioned adjacent to the second side of the white electro-optic layer;
a liquid crystal layer having first and second sides opposed to one another, the liquid crystal layer being operatively connected to the addressing layer;
a transparent conducting layer having first and second sides opposed to one another, the first side of the transparent conducting layer being positioned adjacent to the second side of the liquid crystal layer; and
a color filter positioned adjacent to the second side of the transparent conducting layer.

14. The transflective display as defined in claim 13 wherein the liquid crystal layer includes a twisted nematic liquid crystal, and wherein the display further comprises:
a horizontally oriented polarizer positioned between the white-electro-optic layer and the addressing layer; and
a vertically oriented polarizer positioned adjacent to the second side of the liquid crystal layer.

15. The transflective display as defined in claim 13 wherein the white electro-optic layer includes:
first and second electrodes defining a space therebetween;
a carrier fluid occupying the space between the first and second electrodes wherein the carrier fluid is chosen from a non-polar fluid and an anisotropic fluid; and
white pigments present in the carrier fluid, wherein the white pigments are chosen from titanium dioxide, silicon dioxide, zinc oxide, zinc sulfide, antimony oxide, zirconium oxide, zirconium silicate, and combinations thereof.

16. The transflective display as defined in claim 15 wherein the white pigments include a plurality of pigment particles with different diameters.

17. A method involving a display stack which includes a liquid crystal layer and an addressing layer operatively connected to the liquid crystal layer, the method comprising:
positioning a white electro-optic layer between a backlight and the addressing layer of the display stack; and
operatively connecting the white electro-optic layer to a light sensor that controls a state of the white electro-optic layer between a transmissive mode and a reflective mode in response to ambient lighting conditions.

18. The method as defined in claim 17, further comprising forming the white electro-optic layer by:
positioning first and second electrodes such that a space is defined therebetween; and
introducing a white pigment dispersion into the space, the white pigment dispersion including a carrier fluid and white pigments dispersed in the carrier fluid.

19. The method as defined in claim 18, further comprising:
selecting the carrier fluid from any of a non-polar fluid or an anisotropic fluid; and
selecting the white pigments from any of titanium dioxide, silicon dioxide, zinc oxide, zinc sulfide, antimony oxide, zirconium oxide, zirconium silicate, and combinations thereof.

20. The method as defined in claim 19 wherein selecting the white pigments includes selecting a mixture of white pigments having different particle sizes that scatter different visible wavelengths.
